# EUROPEAN PATENT SPECIFICATION

(11) **EP 4 131 082 B1**
(45) Date of publication and mention of the grant of the patent: **19.11.2025**
(21) Application number: 21878996.4
(22) Date of filing: 21.06.2021
(51) Int. Cl.: G06F 21/31, G06F 3/147, G06N 3/08, G06F 18/21

(54) **DATA MEASUREMENT METHOD AND APPARATUS, AND ELECTRONIC DEVICE AND COMPUTER-READABLE MEDIUM**
DATENMESSVERFAHREN UND -VORRICHTUNG SOWIE ELEKTRONISCHE VORRICHTUNG UND COMPUTERLESBARES MEDIUM
PROCÉDÉ ET APPAREIL DE MESURE DE DONNÉES ET DISPOSITIF ÉLECTRONIQUE ET SUPPORT LISIBLE PAR ORDINATEUR

(30) Priority: 14.10.2020 CN 202011095139
(43) Date of publication of application: 08.02.2023
(73) Proprietor: Ennew Digital Technology Co., Ltd., Beijing 100020 (CN)
(72) Inventor: ZHANG, Min, Beijing 100020 (CN); GAO, Qing, Beijing 100020 (CN)
(74) Representative: Bayramoglu et al.
(86) International application number: PCT/CN2021/101133
(87) International publication number: WO 2022/077946

(56) References cited:
- WO-A1-2018/075995
- CN-A- 107 766 940
- CN-A- 107 766 940
- CN-A- 109 492 771
- CN-A- 110 263 930
- CN-A- 110 543 946
- US-A1- 2019 258 903
- SUNGPIL SHIN ETRI KOREA (REPUBLIC OF): "Draft Recommendation ITU-T Y.MLaaS-reqts: "Cloud computing- functional requirements for machine learning as a service";TDxxx", vol. 17/13, 28 July 2020 (2020-07-28), pages 1 - 48, XP044291368, Retrieved from the Internet <URL:https://www.itu.int/ifa/t/2017/sg13/exchange/wp2/q17/202007/Drafting/Y.MLaaS-reqts/OutputDraft/Output_Draft_Y.MLaaS-reqts_r3-Kangchan.docx> [retrieved on 20200728]

## Description

### TECHNICAL FIELD

Embodiments of the present disclosure relate to the field of computer technologies, and in particular, to a data measurement method and apparatus, an electronic device and a computer-readable medium.

### BACKGROUND

With the development of Internet technologies, people have entered the era of big data. Different fields and industries may produce different data, and people often use obtained data for calculation to understand industry development and industrial production. Due to a large amount of data, users' requirements for data calculation are generally met by means of some programs and service software. Thus, an efficient and manageable data measurement method is in need.

US2019/258903A1 ("D1") discloses systems and methods for automated custom training of a scoring model, the method include: receiving a plurality of responses received from a plurality of students in response to providing of a prompt; identifying an evaluation model relevant to the provided prompt, which evaluation model can be a machine learning model trained to output a score relevant to at least portions of a response; generating a training indicator that provides a graphical depiction of the degree to which the identified evaluation model is trained; determining a training status of the model; receiving at least one evaluation input when the model is identified as insufficiently trained; updating training of the evaluation model based on the at least one received evaluation input; and controlling the training indicator to reflect the degree to which the evaluation model is trained subsequent to the updating of the training of the evaluation model.

"Cloud computing-functional requirements for machine learning as a service" ("D2") provides cloud computing requirements for machine learning as a service (MLaaS), which addresses requirements from use cases. MLaaS is a cloud service category in which the capability provided to the cloud service customer is the provision and use of a machine learning (ML) framework, which is a set of functionalities for provisioning ML data, as well as training, deployment and management of an ML model.

WO2018/075995A1 ("D3") discloses that predictive data analytics techniques may include improved techniques for generating predictive models for time-series prediction problems, improved techniques for determining predictive values of input variables ("features"), and improved techniques for generating second-order models of first-order predictive models.

CN107766940A ("D4") discloses a method and device for generating a model. The method in a specific embodiment includes: in response to a received model generation request sent from a user terminal and including a user identifier, searching for a model information set corresponding to the user identifier from a preset model table, and sending the model information set to the terminal, wherein the model information in the model information set includes a model category and a model parameter, the model table is configured to represent a relation between the user identifier and the model information; in response to the received model category and the model parameter selected by the user from the model information set and sent by the terminal, determining a neural network that matches the model category and the model parameter selected by the user; and in response to a received sample data set sent by the terminal, training a model based on the sample data set and the neural network by using a machine learning method. The method can generate a user-defined neural network model.

CN110543946A("D5") discloses a method and device for training a model. One specific embodiment of the method comprises the steps: receiving a model training request sent by a client, wherein the model training request comprises a target model type; matching the target model type with model types in a historical model configuration set; in response to successful matching, executing the following first training steps: sending configuration data of a historical model corresponding to the successfully matched model type to the client; receiving first configuration modification data sent by the client for the configuration data; and determining a first initial target model according to the configuration data and the first configuration modification data, and training the first initial target model to obtain a target model, wherein model parameters of the first initial target model are determined according to model parameters of the historical model corresponding to the successfully matched model type. Therefore, the target model is obtained through training based on the configuration data of the historical model, and the model training efficiency is improved.

### Technical Problem

Summary of the present disclosure is used to briefly introduce ideas that will be described in detail later in Detailed Description. Summary of the present disclosure is neither intended to identify key features or essential features of the technical solution sought for protection, nor intended to be used to limit the scope of the technical solution sought for protection.

According to some embodiments of the present disclosure, a data measurement method and apparatus, an electronic device and a computer-readable medium are provided to solve the technical problems mentioned in Background.

In a first aspect, according to some embodiments of the present disclosure, a data measurement method is provided, including: acquiring a data set; inputting the data set to a pre-trained deep learning network, and outputting a processing result, wherein the deep learning network is trained through a training sample set, and the training of the deep learning network comprises: acquiring identity information of a target user in response to receiving a training request of the target user, verifying the identity information and determining whether the verification is passed, and controlling a target training engine to start training in response to determining that the identity information passes the verification; and determining the processing result as a measurement result, and controlling a target device with a display function to display the measurement result, wherein the training of the deep learning network further comprises: verifying, in response to detecting a selection operation of the target user for a training model in a training model base, the target training engine to determine whether the verification is passed; transmitting, in response to determining that the target training engine passes the verification, an initial model to a terminal device of the target user; training the initial model by using the acquired training sample set, to obtain a trained initial model at the terminal device; and aggregating, by using the target training engine, at least one model stored by the terminal device and the trained initial model, to obtain a combined training model.

Preferably, a training sample in the training sample set comprises a sample data set and a sample processing result, and the deep learning network is trained by taking the sample data set as input and the sample processing result as expected output.

Preferably, the method further comprises: controlling the target training engine to stop training in response to detecting a combination termination request of the target user, and storing a combined training model when the training is stopped to a target model base.

Preferably, the method further comprises: acquiring a query interface in response to detecting a query operation of the target user; and extracting, from the target model base, historical records and state information of a model having an interface the same as the query interface, and controlling the target device to display the historical records and the state information.

In a second aspect, according to some embodiments of the present disclosure, a data measurement apparatus is provided, including: an acquisition unit configured to acquire a data set; a processing unit configured to input the data set to a pre-trained deep learning network, and output a processing result, wherein the deep learning network is trained through a training sample set, and the training of the deep learning network comprises: acquiring identity information of a target user in response to receiving a training request of the target user, verifying the identity information and determining whether the verification is passed, and controlling a target training engine to start training in response to determining that the identity information passes the verification; and a display unit configured to determine the processing result as a measurement result, and control a target device with a display function to display the measurement result, wherein the training of the deep learning network further comprises: verifying, in response to detecting a selection operation of the target user for a training model in a training model base, the target training engine to determine whether the verification is passed; transmitting, in response to determining that the target training engine passes the verification, an initial model to a terminal device of the target user; training the initial model by using the acquired training sample set, to obtain a trained initial model at the terminal device; and aggregating, by using the target training engine, at least one model stored by the terminal device and the trained initial model, to obtain a combined training model.

In a third aspect, according to some embodiments of the present disclosure, an electronic device is provided, including: one or more processors; and a storage apparatus storing one or more programs; the one or more programs, when executed by the one or more processors, causing the one or more processors to perform the method as described in the first aspect.

In a fourth aspect, according to some embodiments of the present disclosure, a computer-readable medium is provided, storing a computer program, wherein, when the program is executed by a processor, the method as described in the first aspect is performed.

One of the above embodiments of the present disclosure has the following beneficial effect. The data set is inputted to the pre-trained deep learning network, so as to obtain a measurement result meeting a requirement of a user. The user's requirement for data calculation is met, providing convenience for the user' subsequent use of data.

### BRIEF DESCRIPTION OF THE DRAWINGS

The above and other features, advantages and aspects of the embodiment of the present disclosure will become more obvious with reference to the accompanying drawings and the following specific implementations. Throughout the accompanying drawings, identical or similar reference numerals represent identical or similar elements. It is to be understood that the accompanying drawings are schematic and that components and elements are not necessarily drawn to scale.
FIG. 1 is a schematic diagram of an application scenario of a data measurement method according to some embodiments of the present disclosure;
FIG. 2 is a flowchart of a data measurement method according to the present disclosure;
FIG. 3 is a flowchart of some embodiments of training of a deep learning network in the data measurement method according to the present disclosure;
FIG. 4 is a schematic structural diagram of some embodiments of a data measurement apparatus according to the present disclosure; and
FIG. 5 is a schematic structural diagram of an electronic device configured to implement some embodiments of the present disclosure.

### DETAILED DESCRIPTION

The embodiments of the present disclosure are described in more detail below with reference to the accompanying drawings. Although some embodiments of the present disclosure are shown in the accompanying drawings, it is to be understood that the present disclosure may be implemented in various forms and should not be interpreted as being limited to the embodiments described herein. Rather, these embodiments are provided for a more thorough and complete understanding of the present disclosure. It is to be understood that the accompanying drawings and embodiments of the present disclosure are for exemplary purposes only and are not intended to limit the scope of protection of the present disclosure.

In addition, it is to be further noted that only the parts related to the invention are shown in the accompanying drawings for the convenience of description. Embodiments in the present disclosure and features in the embodiments may be combined with each other without conflict.

It is to be noted that the concepts such as "first" and "second" mentioned in the present disclosure are used only to distinguish different apparatuses, modules or units and are not intended to define the sequence or interdependence of functions performed by the apparatuses, modules or units.

It is to be noted that "one" and "more than one" mentioned in the present disclosure are illustrative but not restrictive modifiers, and should be understood by those skilled in the art as "one or more" unless otherwise expressly stated in the context.

Names of messages or information exchanged between a plurality of apparatuses in implementations of the present disclosure are used for illustrative purposes only and are not intended to limit the scope of such messages or information.

The present disclosure is described in detail below with reference to the accompanying drawings and embodiments.

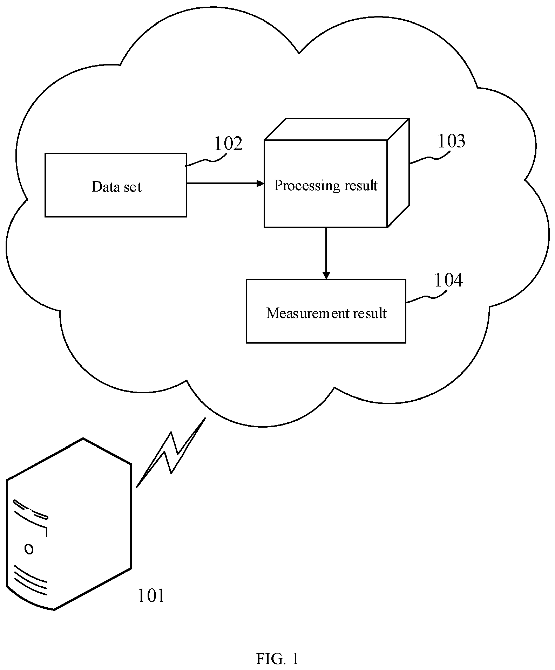

FIG. 1 is a schematic diagram of an application scenario of a data measurement method according to some embodiments of the present disclosure.

In the application scenario of FIG. 1, firstly, a computing device 101 may acquire a data set 102. Then, the computing device 101 may input the data set 102 to a pre-trained deep learning network and output a processing result 103. Finally, the computing device 101 may determine the processing result 103 as a measurement result 104. In addition, the computing device 101 may control a target device with a display function to display the measurement result 104.

It is to be noted that the computing device 101 may be hardware or software. When being hardware, the computing device may be implemented as a distributed cluster formed by a plurality of servers or terminals, or as a single server or a single terminal device. When being software, the computing device may be installed in the hardware device listed above. It may be implemented as, for example, a plurality of software or software modules to provide distributed services, or as a single software or software module. Specific limitations are not made herein.

It is to be understood that a number of the computing device in FIG. 1 is merely illustrative. Any number of computing devices may be provided according to implementation requirements.

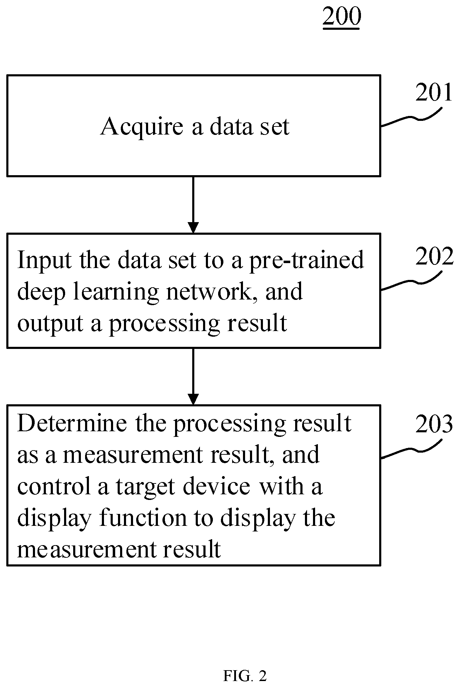

Still refer to FIG. 2 which shows a flow 200 of some embodiments of the data measurement method according to the present disclosure. The method may be performed by the computing device 101 in FIG. 1. The data measurement method includes the following steps.

In step 201, a data set is acquired.

In some embodiments, an execution subject (such as the computing device 101 shown in FIG. 1) of the data measurement method may acquire the data set in a wired or wireless connection manner. For example, the execution subject may receive a data set inputted by a user as the data set. In another example, the execution subject may be connected to another electronic device in a wired or wireless connection manner, and acquire a data set in a database of the electronic device connected as the data set.

It is to be noted that the wireless connection manner may include, but is not limited to, 3G/4G connection, WiFi connection, Bluetooth connection, WiMAX connection, Zigbee connection, ultra wideband (UWB) connection, and other wireless connection manners known now or to be developed in the future.

In step 202, the data set is inputted to a pre-trained deep learning network, and a processing result is outputted.

In some embodiments, the execution subject may input the data set to the pre-trained deep learning network and output a processing result. Here, for the deep learning network, input may be the data set and output may be the processing result. As an example, the deep learning network may be a Recurrent Neural Network (RNN) or a Long Short-Term Memory networks (LSTM).

As an example, the data set may be "flue gas temperature, flue gas flow, flue gas humidity, vapor flow, and economizer outlet temperature." The outputted processing result may be boiler flue gas oxygen content.

In some embodiments, the training of the deep learning network includes: acquiring identity information of a target user in response to receiving a training request of the target user; verifying the identity information and determining whether the verification is passed; and controlling a target training engine to start training in response to determining that the identity information passes the verification.

In step 203, the processing result is determined as a measurement result, and a target device with a display function is controlled to display the measurement result.

In some embodiments, the execution subject may determine the processing result as a measurement result. Then, the execution subject may push the measurement result to a target device with a display function and control the target device to display the measurement result.

One of the above embodiments of the present disclosure has the following beneficial effect. The data set is inputted to the pre-trained deep learning network, so as to obtain a measurement result meeting a requirement of a user. The user's requirement for data calculation is met, providing convenience for the user' subsequent use of data.

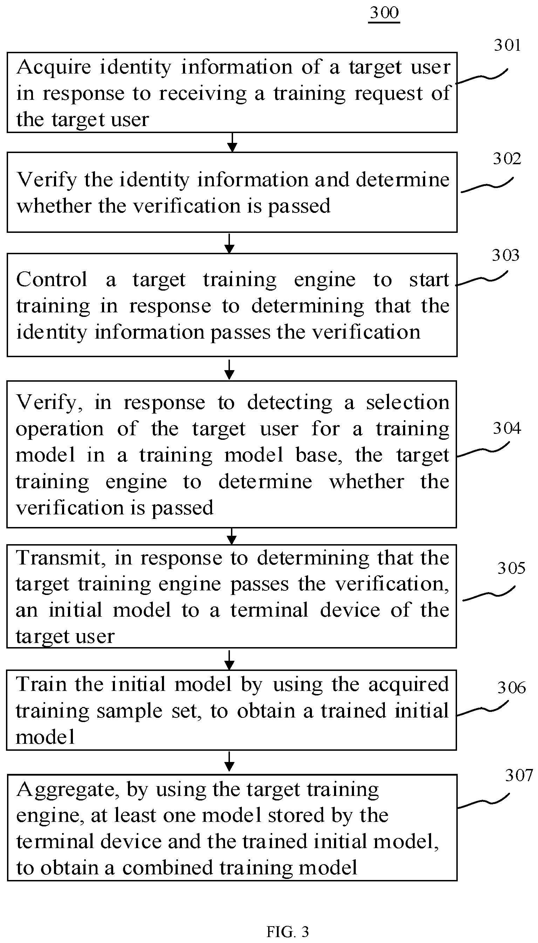

Still refer to FIG. 3 which is a flowchart 300 of some embodiments of training of a deep learning network in the data measurement method according to the present disclosure. The method may be performed by the computing device 101 in FIG. 1. The data measurement method includes the following steps.

In step 301, identity information of a target user is acquired in response to receiving a training request of the target user.

In some embodiments, an execution subject (such as the computing device 101 shown in FIG. 1) of the data measurement method may acquire identity information of the target user in response to receiving a training request of the target user. Here, the training request may be an instruction for starting training a model. The target user may be a user in need of training and having passes verification such as preset registration and authentication.

In step 302, the identity information is verified and it is determined whether the verification is passed.

In some embodiments, the execution subject may verify the identity information and determine whether the verification is passed. As an example, the execution subject retrieves, based on the identity information, a pre-constructed identity information base to determine whether the identity information exists in the identity information base. In response to determining that the identity information exists, the execution subject may determine that the verification is successful.

In step 303, a target training engine is controlled to start training in response to determining that the identity information passes the verification.

In some embodiments, the execution subject may control a target training engine to start training in response to determining that the identity information passes the verification. The training engine may be an engine that supports a plurality of algorithm selection modules to provide support for training the deep learning network in different service scenarios.

In step 304, in response to detecting a selection operation of the target user for a training model in a training model base, the target training engine is verified to determine whether the verification is passed.

In some embodiments, the execution subject may verify, in response to detecting a selection operation of the target user for a training model in a training model base, the target training engine to determine whether the verification is passed. Here, the training model base may be a set of training models for users to select to meet their requirements. As an example, the execution subject may verify a permission of the target training engine to determine whether the target training engine has the permission to support the training of the training model selected by the target user.

As an example, the training model base may be "training model A, training model B, training model C". A training permission of the target engine may be "training model A and training model C". If the target user selects the training model as "training model B", the execution subject may determine that the verification on the target training engine is not passed. Otherwise, the execution subject may determine that the verification on the target training engine is passed.

In step 305, in response to determining that the target training engine passes the verification, an initial model is transmitted to a terminal device of the target user.

In some embodiments, in response to determining that the target training engine passes the verification, the execution subject may transmit an initial model to a terminal device of the target user. Here, the initial model may be a model untrained or not meeting a preset condition after training. The initial model may also be a model having a deep neural network structure. A pre-trained feature extraction model may be a pre-trained neural network model for feature extraction. The neural network model may have various existing neural network structures. For example, the neural network model may be a Convolutional Neural Network (CNN). eXtreme Gradient Boosting (XGBoost) may be used for the initial model. A storage position of the initial model is not limited in the present disclosure.

In step 306, the initial model is trained by using the acquired training sample set, to obtain a trained initial model.

In some embodiments, the execution subject may start training the initial model by using the acquired training sample set. A training process is as follows. In a first step, a training sample is selected from the training sample set, wherein the training sample includes a sample data set and a sample processing result. In a second step, the execution subject inputs the sample data set in the training sample to the initial model. In a third step, an outputted processing result is compared with the sample processing result to obtain a processing result loss value. In a fourth step, the execution subject may compare the processing result loss value with a preset threshold to obtain a comparison result. In a fifth step, it is determined according to the comparison result whether the initial model has been trained. In a sixth step, in response to completion of the training of the initial model, the initial model is determined as a trained initial model. Here, the acquired training sample set may be local data of a terminal device of the target user.

The processing result loss value described above may be a value obtained by inputting the outputted processing result and the corresponding sample processing result to an executed loss function as parameters. Here, the loss function (such as a square loss function or an exponential loss function) is generally used for estimating a degree of inconsistency between a predicted value (such as the sample processing result corresponding to the sample data set) and a real value (such as the processing result obtained through the above steps) of a model. It is a non-negative real-valued function. Generally, the smaller the loss function, the better the robustness of the model. The loss function may be set according to an actual requirement. As an example, the loss function may be a cross entropy loss function.

In some optional implementations of some embodiments, the method further includes: in response to determining that the training of the initial model is not completed, adjusting related parameters in the initial model, and re-selecting a sample from the training sample set and using the adjusted initial model as an initial model to continue the training step.

In some optional implementations of some embodiments, the trained initial model may ensure continuous upload and download between the terminal device and the target training engine on the premise of compression protocol and security protocol, and the trained initial model may be continuously updated by iteration.

In step 307, at least one model stored by the terminal device and the trained initial model are aggregated by using the target training engine to obtain a combined training model.

In some embodiments, the execution subject may aggregate, by using the target training engine, at least one model stored by the terminal device and the trained initial model, to obtain a combined training model.

In some optional implementations of some embodiments, the method further includes: controlling the target training engine to stop training in response to detecting a combination termination request of the target user, and storing a combined training model when the training is stopped to a target model base. Here, the execution subject may generate an interface for the combined training model, and then store the combined training model for which the interface is generated to the target model base. The execution subject may store training records related to the combined training model and state information during the training to a cloud database.

In some optional implementations of some embodiments, the method further includes: acquiring a query interface in response to detecting a query operation of the target user; and extracting, from the target model base, historical records and state information of a model having an interface the same as the query interface, and controlling the target device to display the historical records and the state information. Here, the historical records may be information for each training in a model training process.

As can be seen from FIG. 3, compared with the descriptions of some embodiments corresponding to FIG. 2, the flow 300 of the data measurement method in some embodiments corresponding to FIG. 3 reflects the steps of how to train the deep learning network and obtain the combined training model. Thus, the solutions described in the embodiments may obtain a measurement result meeting a requirement of a user by processing a data set. The user's requirement for data calculation is met, providing convenience for the user' subsequent use of data. In addition, by measuring and calculating data with the combined training model, an error caused by manual calculation may be prevented to great extent and a more accurate measurement result may be obtained. The user may select training models for different business scenarios, which improves the utilization of the model. The generated combined training model also better meets user requirements and improves user experience to some extent.

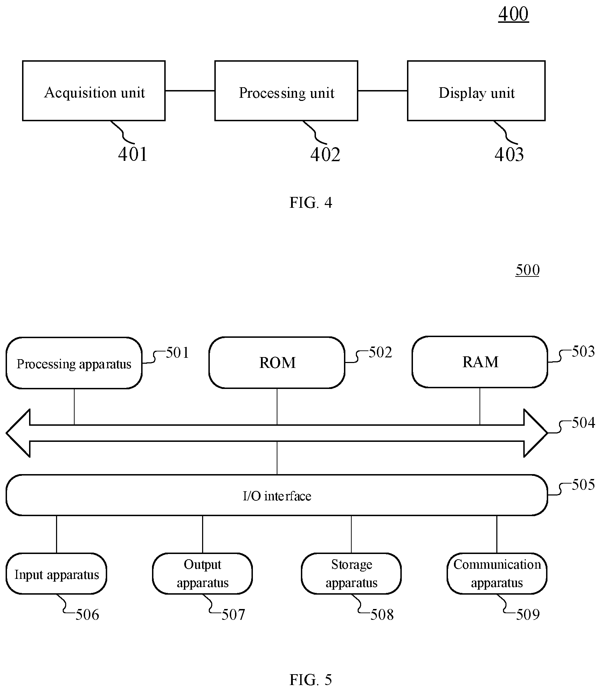

Further referring to FIG. 4, as implementations to the methods in the above figures, the present disclosure provides some embodiments of a data measurement apparatus. The apparatus embodiments correspond to the method embodiments in FIG. 2. The apparatus may be specifically applied to a variety of electronic devices.

As shown in FIG. 4, a data measurement apparatus 400 according to some embodiments includes: an acquisition unit 401, a processing unit 402 and a display unit 403. The acquisition unit 401 is configured to acquire a data set. The processing unit 402 is configured to input the data set to a pre-trained deep learning network, and output a processing result, wherein the deep learning network is trained through a training sample set, and the training of the deep learning network includes: acquiring identity information of a target user in response to receiving a training request of the target user; verifying the identity information and determining whether the verification is passed; and controlling a target training engine to start training in response to determining that the identity information passes the verification. The display unit 403 is configured to determine the processing result as a measurement result, and control a target device with a display function to display the measurement result.

In some optional implementations of some embodiments, the training of the deep learning network includes: verifying, in response to detecting a selection operation of the target user for a training model in a training model base, the target training engine to determine whether the verification is passed; transmitting, in response to determining that the target training engine passes the verification, an initial model to a terminal device of the target user; training the initial model by using the acquired training sample set, to obtain a trained initial model; and aggregating, by using the target training engine, at least one model stored by the terminal device and the trained initial model, to obtain a combined training model.

In some optional implementations of some embodiments, a training sample in the training sample set includes a sample data set and a sample processing result, and the deep learning network is trained by taking the sample data set as input and the sample processing result as expected output.

In some optional implementations of some embodiments, the data measurement apparatus 400 is further configured to: control the target training engine to stop training in response to detecting a combination termination request of the target user, and store a combined training model when the training is stopped to a target model base.

In some optional implementations of some embodiments, the data measurement apparatus 400 is further configured to: acquire a query interface in response to detecting a query operation of the target user; and extract, from the target model base, historical records and state information of a model having an interface the same as the query interface, and control the target device to display the historical records and the state information.

It may be understood that the units in the apparatus 400 correspond to the steps in the method described with reference to FIG. 2. Thus, the operations, features and beneficial effects described above for the method also apply to the apparatus 400 and the units included therein, which are not described in detail herein.

Refer to FIG. 5 below which is a schematic structural diagram of an electronic device (such as the computing device 101 in FIG. 1) 500 configured to implement some embodiments of the present disclosure. A server shown in FIG. 5 is only an example and should not impose any limitations on functionality and scope of use of the embodiments of the present disclosure.

As shown in FIG. 5, the electronic device 500 may include a processing apparatus (such as a central processing unit or a graphics processor) 501, which may execute various appropriate actions and processing according to programs stored in a read-only memory (ROM) 502 or programs loaded from a storage apparatus 508 into a random access memory (RAM) 503. The RAM 503 further stores various programs and data required by operation of the electronic device 500. The processing apparatus 501, the ROM 502 and the RAM 503 are connected to one another via a bus 504. An input/output (I/O) module 505 is also connected to the bus 504.

Generally, the following apparatus may be connected to the I/O interface 505: an input apparatus 506 including, for example, a touch screen, a touchpad, a keyboard, a mouse, a camera, a microphone, an accelerometer, a gyroscope, and the like; an output apparatus 507 including, for example, a liquid crystal display (LCD), a speaker, a vibrator, and the like; a storage apparatus 508 including, for example, a magnetic tape, a hard disk, and the like; and a communication apparatus 509. The communication apparatus 509 may allow the electronic device 500 to conduct wireless or wired communication with other devices to exchange data. Although FIG. 5 illustrates an electronic device 500 having various apparatuses, it should be understood that it is not required to implement or have all of the illustrated apparatuses. Alternatively, more or fewer apparatuses may be implemented or included. Each block shown in FIG. 5 may represent one apparatus or a plurality of apparatuses as required.

In particular, the processes described above with reference to the flowcharts may be implemented as a computer software program according to some embodiments of the present disclosure. For example, some embodiments of the present disclosure include a computer program product including a computer program loaded on a computer-readable medium, and the computer program includes program code for executing the method shown in the flowchart. In such embodiments, the computer program may be downloaded and installed from the network via the communication apparatus 509, or installed from the storage apparatus 508, or installed from the ROM 502. When the computer program is executed by the processing apparatus 501, the above functions defined in the method of the embodiments of the present disclosure are executed.

It is to be noted that the above computer-readable medium according to some embodiments of the present disclosure may be a computer-readable signal medium or a computer-readable storage medium or any combination thereof. The computer-readable storage medium may be, for example, but is not limited to, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer disk, a hard disk, a random access memory (RAM), a read-only memory (ROM), an erasable programmable read only memory (EPROM or flash memory), an optical fiber, a portable compact disk read-only memory (CD-ROM), an optical storage device, a magnetic storage device, or any suitable combination thereof. In some embodiments of the present disclosure, the computer-readable storage medium may be any tangible medium that contains or stores programs, which may be used by or in connection with an instruction execution system, apparatus, or device. In some embodiments of the present disclosure, the computer-readable signal medium may include a data signal that is propagated in the baseband or propagated as part of a carrier, carrying computer-readable program codes. Such propagated data signals may take various forms, including, but not limited to, electromagnetic signals, optical signals, or any suitable combination thereof. The computer-readable signal medium may also be any computer-readable medium except for the computer-readable storage medium, and the computer-readable signal medium may send, propagate or transmit a program for use by or in connection with an instruction execution system, apparatus or device. Program codes included on the computer-readable medium may be transmitted by any suitable medium, which includes, but is not limited to, a wire, a fiber optic cable, RF (radio frequency), and the like, or any suitable combination thereof.

In some implementations, the client and the server may communicate using any network protocol currently known or developed in the future, such as a HyperText Transfer Protocol (HTTP), and may interconnect with digital data communication (such as a communication network) in any form or medium. Examples of the communication network include a local area network ("LAN"), a wide area networks ("WAN"), an inter-network (e.g., the Internet), a peer-to-peer network (e.g., an ad hoc peer-to-peer network), as well as any network currently known or developed in the future.

The computer-readable medium may be included in the apparatus; or may be separately present and is not incorporated in the electronic device. The computer-readable medium carries one or more programs. The one or more programs, when executed by the electronic device, cause the electronic device to: acquire a data set; input the data set to a pre-trained deep learning network, and output a processing result, wherein the deep learning network is trained through a training sample set, and the training of the deep learning network includes: acquiring identity information of a target user in response to receiving a training request of the target user; verifying the identity information and determining whether the verification is passed; and controlling a target training engine to start training in response to determining that the identity information passes the verification; and determine the processing result as a measurement result, and control a target device with a display function to display the measurement result.

Computer program codes for executing the operations of some embodiments of the present disclosure may be written in one or more programming languages, or combinations thereof, wherein the programming languages include an object-oriented programming language such as Java, Smalltalk, C++, and also include conventional procedural programming language, such as "C" language or similar programming languages. The program codes may be executed entirely on the user's computer, partly executed on the user's computer, executed as an independent software package, partly executed on the user's computer and partly executed on a remote computer, or entirely executed on a remote computer or on a server. In the case of involving the remote computer, the remote computer may be connected to the user's computer through any kind of network, including a local area network (LAN) or a wide area network (WAN), or may be connected to an external computer (e.g., using an Internet service provider to connect via the Internet).

The flowcharts and block diagrams in the drawings illustrate the architecture, function, and operation of possible implementations of systems, methods, and computer program products according to various embodiments of the present disclosure. In this regard, each block of the flowchart or block diagram may represent one module, a program segment, or a portion of the codes, and the module, the program segment, or the portion of codes includes one or more executable instructions for implementing specified logic functions. It should also be noted that in some alternative implementations, the functions marked in the blocks may also occur in an order different from the order marked in the drawings. For example, two successively represented blocks may in fact be executed substantially in parallel, and they may sometimes be executed in an opposite order, depending upon the involved function. It is also to be noted that each block of the block diagrams and/or flowcharts, and combinations of blocks in the block diagrams and/or flowcharts, may be implemented in a dedicated hardware-based system that executes specified functions or operations, or may be implemented by a combination of dedicated hardware and computer instructions.

The units described in some embodiments of the present disclosure may be implemented either in software or in hardware. The units described may also be arranged in a processor, which, for example, may be described as: a processor includes an acquisition unit, a processing unit, and a display unit. The names of these units do not, in some cases, qualify the units. For example, the acquisition unit may also be described as "a unit for acquiring a data set".

The functions described above herein can be performed at least in part by one or more hardware logic components. For example, non-restrictively, usable exemplary logical components of hardware include: a Field Programmable Gate Array (FPGA), an Application Specific Integrated Circuit (ASIC), an Application Specific Standard Product (ASSP), a System on Chip (SOC), a Complex Programmable Logic Device (CPLD), and the like.

The above descriptions are only some preferred embodiments of the present disclosure and a description of the principles of the applied technology. It should be understood by those skilled in the art that the invention scope involved in the embodiments of the present disclosure is not limited to the specific technical solutions of the above technical features, but is only limited as specified in the appended claims.

## Claims

1. A data measurement method, comprising:
acquiring a data set;
inputting the data set to a pre-trained deep learning network, and outputting a processing result, wherein the deep learning network is trained through a training sample set, and the training of the deep learning network comprises:
acquiring identity information of a target user in response to receiving a training request of the target user;
verifying the identity information and determining whether the verification is passed; and
controlling a target training engine to start training in response to determining that the identity information passes the verification; and
determining the processing result as a measurement result, and controlling a target device with a display function to display the measurement result,
wherein the training of the deep learning network further comprises:
verifying, in response to detecting a selection operation of the target user for a training model in a training model base, the target training engine to determine whether the verification is passed;
transmitting, in response to determining that the target training engine passes the verification, an initial model to a terminal device of the target user;
training the initial model by using the acquired training sample set, to obtain a trained initial model at the terminal device; and
aggregating, by using the target training engine, at least one model stored by the terminal device and the trained initial model, to obtain a combined training model.

2. The method according to claim 1, wherein a training sample in the training sample set comprises a sample data set and a sample processing result, and the deep learning network is trained by taking the sample data set as input and the sample processing result as expected output.

3. The method according to claim 1, wherein the method further comprises:
controlling the target training engine to stop training in response to detecting a combination termination request of the target user, and storing a combined training model when the training is stopped to a target model base.

4. The method according to claim 3, wherein the method further comprises:
acquiring a query interface in response to detecting a query operation of the target user; and
extracting, from the target model base, historical records and state information of a model having an interface the same as the query interface, and controlling the target device to display the historical records and the state information.

5. A data measurement apparatus, comprising:
an acquisition unit configured to acquire a data set;
a processing unit configured to input the data set to a pre-trained deep learning network, and output a processing result, wherein the deep learning network is trained through a training sample set, and the training of the deep learning network comprises:
acquiring identity information of a target user in response to receiving a training request of the target user;
verifying the identity information and determining whether the verification is passed; and
controlling a target training engine to start training in response to determining that the identity information passes the verification; and
a display unit configured to determine the processing result as a measurement result, and control a target device with a display function to display the measurement result,
wherein the training of the deep learning network further comprises:
verifying, in response to detecting a selection operation of the target user for a training model in a training model base, the target training engine to determine whether the verification is passed;
transmitting, in response to determining that the target training engine passes the verification, an initial model to a terminal device of the target user;
training the initial model by using the acquired training sample set, to obtain a trained initial model at the terminal device; and
aggregating, by using the target training engine, at least one model stored by the terminal device and the trained initial model, to obtain a combined training model.

6. An electronic device, comprising:
one or more processors; and
a storage apparatus storing one or more programs;
the one or more programs, when executed by the one or more processors, causing the one or more processors to perform the method according to claim 1.

7. A computer-readable medium, storing a computer program, wherein, when the program is executed by a processor, the method according to claim 1 is performed.

## Patentansprüche

1. Datenmessverfahren, umfassend:
Erfassen eines Datensatzes;
Eingeben des Datensatzes in ein vortrainiertes Deep-Learning-Netzwerk und Ausgeben eines Verarbeitungsergebnisses, wobei das Deep-Learning-Netzwerk durch einen Trainingsprobesatz trainiert wird und das Training des Deep-Learning-Netzwerks Folgendes umfasst:
Erfassen von Identitätsinformationen eines Zielnutzers als Reaktion auf das Empfangen einer Trainingsanfrage des Zielnutzers;
Verifizieren der Identitätsinformationen und Feststellen, ob die Verifizierung bestanden wurde, und
Steuern einer Zieltrainingsmaschine, um das Training zu starten, als Reaktion auf das Feststellen, dass die Identitätsinformationen die Verifizierung bestehen, und
Feststellen des Verarbeitungsergebnisses als Messergebnis und Steuern einer Zielvorrichtung mit einer Anzeigefunktion, um das Messergebnis anzuzeigen,
wobei das Training des Deep-Learning-Netzwerks ferner Folgendes umfasst:
als Reaktion auf das Erkennen eines Auswahlvorgangs des Zielnutzers für ein Trainingsmodell in einer Trainingsmodellbasis Verifizieren der Zieltrainingsmaschine, um festzustellen, ob die Verifizierung bestanden ist;
als Reaktion auf das Feststellen, dass die Zieltrainingsmaschine die Verifizierung besteht, Übertragen eines Ausgangsmodells an ein Endgerät des Zielnutzers;
Trainieren des Ausgangsmodells unter Verwendung des erfassten Trainingsprobesatzes, um ein trainiertes Ausgangsmodell am Endgerät zu erhalten, und
unter Verwendung der Zieltrainingsmaschine Aggregieren mindestens eines vom Endgerät gespeicherten Modells und des trainierten Ausgangsmodells, um ein kombiniertes Trainingsmodell zu erhalten.

2. Verfahren nach Anspruch 1, wobei eine Trainingsprobe im Trainingsprobesatz einen Probedatensatz und ein Probeverarbeitungsergebnis umfasst und das Deep-Learning-Netzwerk trainiert wird, indem der Probedatensatz als Eingabe und das Probeverarbeitungsergebnis als Sollausgabe herangezogen werden.

3. Verfahren nach Anspruch 1, wobei das Verfahren ferner Folgendes umfasst:
Steuern der Zieltrainingsmaschine, sodass das Training gestoppt wird, als Reaktion auf das Erkennen einer Anfrage des Zielnutzers zur Beendigung der Kombination und Speichern eines kombinierten Trainingsmodells, wenn das Trainingsmodell gestoppt wird, in einer Zielmodellbasis.

4. Verfahren nach Anspruch 3, wobei das Verfahren ferner Folgendes umfasst:
Erfassen einer Abfrageschnittstelle als Reaktion auf das Erkennen eines Abfragevorgangs des Zielnutzers und
Extrahieren historischer Aufzeichnungen und Zustandsinformationen eines Modells, aufweisend eine Schnittstelle, die der Abfrageschnittstelle gleicht, aus der Zielmodellbasis und Steuern der Zielvorrichtung, sodass die historischen Aufzeichnungen und Zustandsinformationen angezeigt werden.

5. Datenmessgerät, umfassend:
eine Erfassungseinheit, die ausgelegt ist, um einen Datensatz zu erfassen;
eine Verarbeitungseinheit, die ausgelegt ist, um den Datensatz in ein vortrainiertes Deep-Learning-Netzwerk einzugeben und ein Verarbeitungsergebnis auszugeben, wobei das Deep-Learning-Netzwerk durch einen Trainingsprobesatz trainiert wird und das Training des Deep-Learning-Netzwerks Folgendes umfasst:
Erfassen von Identitätsinformationen eines Zielnutzers als Reaktion auf das Empfangen einer Trainingsanfrage des Zielnutzers;
Verifizieren der Identitätsinformationen und Feststellen, ob die Verifizierung bestanden wurde, und
Steuern einer Zieltrainingsmaschine, um das Training zu starten, als Reaktion auf das Feststellen, dass die Identitätsinformationen die Verifizierung bestehen, und
eine Anzeigeeinheit, die ausgelegt ist, um das Verarbeitungsergebnis als Messergebnis festzustellen und eine Zielvorrichtung mit einer Anzeigefunktion so zu steuern, dass das Messergebnis angezeigt wird,
wobei das Training des Deep-Learning-Netzwerks ferner Folgendes umfasst:
als Reaktion auf das Erkennen eines Auswahlvorgangs des Zielnutzers für ein Trainingsmodell in einer Trainingsmodellbasis Verifizieren der Zieltrainingsmaschine, um festzustellen, ob die Verifizierung bestanden ist;
als Reaktion auf das Feststellen, dass die Zieltrainingsmaschine die Verifizierung besteht, Übertragen eines Ausgangsmodells an ein Endgerät des Zielnutzers;
Trainieren des Ausgangsmodells unter Verwendung des erfassten Trainingsprobesatzes, um ein trainiertes Ausgangsmodell am Endgerät zu erhalten, und
unter Verwendung der Zieltrainingsmaschine Aggregieren mindestens eines vom Endgerät gespeicherten Modells und des trainierten Ausgangsmodells, um ein kombiniertes Trainingsmodell zu erhalten.

6. Elektronische Vorrichtung, umfassend:
einen oder mehrere Prozessoren und
ein Speichergerät, das ein oder mehrere Programme speichert;
ein oder mehrere Programme, die, wenn sie durch den einen oder die mehreren Prozessoren ausgeführt werden, bewirken, dass der eine oder die mehreren Prozessoren das Verfahren nach Anspruch 1 durchführen.

7. Computerlesbares Medium, das ein Computerprogramm speichert, wobei das Verfahren nach Anspruch 1 durchgeführt wird, wenn das Programm von einem Prozessor ausgeführt wird.

## Revendications

1. Procédé de mesure de données, comprenant :
l'acquisition d'un ensemble de données ;
l'entrée de l'ensemble de données dans un réseau d'apprentissage profond pré-entraîné, et la délivrance en sortie d'un résultat de traitement, dans lequel le réseau d'apprentissage profond est entraîné à travers un ensemble d'échantillons d'entraînement, et l'entraînement du réseau d'apprentissage profond comprend :
l'acquisition d'informations d'identité d'un utilisateur cible en réponse à la réception d'une demande d'entraînement de l'utilisateur cible ;
la vérification des informations d'identité et la détermination de si la vérification est réussie ; et
la commande d'un moteur d'entraînement cible pour démarrer l'entraînement en réponse à la détermination que les informations d'identité réussissent la vérification ; et
la détermination du résultat de traitement comme résultat de mesure, et la commande d'un dispositif cible avec une fonction d'affichage pour afficher le résultat de mesure,
dans lequel l'entraînement du réseau d'apprentissage profond comprend en outre :
en réponse à la détection d'une opération de sélection de l'utilisateur cible pour un modèle d'entraînement dans une base de modèles d'entraînement, la vérification du moteur d'entraînement cible pour déterminer si la vérification est réussie ;
en réponse à la détermination que le moteur d'entraînement cible réussit la vérification, la transmission d'un modèle initial à un dispositif terminal de l'utilisateur cible ;
l'entraînement du modèle initial en utilisant l'ensemble d'échantillons d'entraînement acquis, pour obtenir un modèle initial entraîné au niveau du dispositif terminal ; et
l'agrégation, en utilisant le moteur d'entraînement cible, d'au moins un modèle stocké par le dispositif terminal et le modèle initial entraîné, pour obtenir un modèle d'entraînement combiné.

2. Procédé selon la revendication 1, dans lequel un échantillon d'entraînement dans l'ensemble d'échantillons d'entraînement comprend un ensemble de données d'échantillon et un résultat de traitement d'échantillon, et le réseau d'apprentissage profond est entraîné en considérant l'ensemble de données d'échantillon comme entrée et le résultat de traitement d'échantillon comme sortie attendue.

3. Procédé selon la revendication 1, dans lequel le procédé comprend en outre :
la commande du moteur d'entraînement cible pour arrêter l'entraînement en réponse à la détection d'une demande de fin de combinaison en provenance de l'utilisateur cible, et le stockage d'un modèle d'entraînement combiné lorsque l'entraînement est arrêté à une base de modèles cibles.

4. Procédé selon la revendication 3, dans lequel le procédé comprend en outre :
l'acquisition d'une interface d'interrogation en réponse à la détection d'une opération d'interrogation de l'utilisateur cible ; et
l'extraction, à partir de la base de modèles cibles, d'enregistrements historiques et d'informations d'état d'un modèle ayant une interface identique à l'interface d'interrogation, et la commande du dispositif cible pour afficher les enregistrements historiques et les informations d'état.

5. Appareil de mesure de données, comprenant :
une unité d'acquisition configurée pour acquérir un ensemble de données ;
une unité de traitement configurée pour entrer l'ensemble de données dans un réseau d'apprentissage profond pré-entraîné, et délivrer en sortie un résultat de traitement, dans lequel le réseau d'apprentissage profond est entraîné à travers un ensemble d'échantillons d'entraînement, et l'entraînement du réseau d'apprentissage profond comprend :
l'acquisition d'informations d'identité d'un utilisateur cible en réponse à la réception d'une demande d'entraînement de l'utilisateur cible ;
la vérification des informations d'identité et la détermination de si la vérification est réussie ; et
la commande d'un moteur d'entraînement cible pour démarrer l'entraînement en réponse à la détermination que les informations d'identité réussissent la vérification ; et
une unité d'affichage configurée pour déterminer le résultat de traitement comme résultat de mesure, et commander un dispositif cible avec une fonction d'affichage pour afficher le résultat de mesure,
dans lequel l'entraînement du réseau d'apprentissage profond comprend en outre :
en réponse à la détection d'une opération de sélection de l'utilisateur cible pour un modèle d'entraînement dans une base de modèles d'entraînement, la vérification du moteur d'entraînement cible pour déterminer si la vérification est réussie ;
en réponse à la détermination que le moteur d'entraînement cible réussit la vérification, la transmission d'un modèle initial à un dispositif terminal de l'utilisateur cible ;
l'entraînement du modèle initial en utilisant l'ensemble d'échantillons d'entraînement acquis, pour obtenir un modèle initial entraîné au niveau du dispositif terminal ; et
l'agrégation, en utilisant le moteur d'entraînement cible, d'au moins un modèle stocké par le dispositif terminal et le modèle initial entraîné, pour obtenir un modèle d'entraînement combiné.

6. Dispositif électronique, comprenant :
un ou plusieurs processeur(s) ; et
un appareil de stockage stockant un ou plusieurs programme(s) ;
le ou les programme(s), lorsqu'ils sont exécutés par le ou les processeur(s), amènent le ou les processeur(s) à effectuer le procédé selon la revendication 1.

7. Support lisible par ordinateur, stockant un programme informatique, dans lequel, lorsque le programme est exécuté par un processeur, le procédé selon la revendication 1 est effectué.
